# EUROPEAN PATENT APPLICATION

(11) **EP 0 911 283 A2**
(43) Date of publication of application: **28.04.1999**
(21) Application number: 98120134.6
(22) Date of filing: 26.10.1998
(51) Int. Cl.: B65G 49/06

(54) **Apparatus for supplying plate-shaped materials**

(30) Priority: 27.10.1997 JP 294349/97
(71) Applicant: Asahi Glass Company Ltd., Chiyoda-ku, Tokyo 100-8305 (JP)
(72) Inventor: Kanno, Ryo, Asahi Glass Co. Ltd., Kashima-gun, Ibaraki (JP); Kaneko, Shizunori, Asahi Glass Co. Ltd., Yokohama-shi, Kanagawa (JP); Okonogi, Yoshio Asahi Glass Company Ltd., Yokohama-shi, Kanagawa (JP); Chosokabe, Hitoshi Asahi Glass Company Ltd., Yokohama-shi, Kanagawa (JP); Aritomi, Akihiko Asahi Glass Company Ltd., Yokohama-shi, Kanagawa (JP)
(74) Representative: Müller-Boré & Partner Patentanwälte

(57) **Abstract**

Slidable carriages are combined with a self-propelled plate remover. The plate remover advances to a plate removing position after moving a desired carriage to an unloading position. After sucking a sheet of plate glass on the desired carriage by suction cups, the plate remover withdraws, arms are turned to a horizontal position in a conveyor and suction is released.

## Description

The present invention relates to an apparatus for supplying plate-shaped materials such as plate glass and, more particularly, to an apparatus for supplying plate-shaped materials which is appropriate to remove a desired kind of plate glass from a plurality of carriages one by one and to supply the plate glass to a working table such as a cutter, many kinds of plate glass being sorted into different kinds of groups and the respective groups of plate glass being put against the respective different carriages.

In general, plate-shaped materials such as plate glass are sorted depending on thicknesses and applications, and are put against plural carriages for storage (see JP-A-956543). As a method for automatically supplying a plural kinds of plate glass thus sorted to a working device such as a cutter, there has been proposed an apparatus for supplying plate glass wherein rails are provided on a position apart from a floor such as a ceiling, a suction type plate glass plate remover is provided along the rails so as to be movable and the plate glass plate remover is moved lengthwise and crosswise between the carriages orderly arranged with adequate intervals so as to suck and transfer desired plate glass (JP-B-772021).

In addition, such a plate remover has been known that swings an arm with suction cups between an uprising position and a horizontal position to remove plate glass from a carriage, put the removed plate glass on rollers of a conveyer and supplies the plate glass to a working machine.

The swingable plate remover is combined with a turntable for turning a carriage, and the direction of the carriage is changed by the turntable to remove different kinds of plate glass. For example, there have been known a so-called two face turntable wherein a single carriage having an A letter cross-section is fixed to a turntable and each group of two kinds of plate glass is put against each of two slant portions of the carriage back to back so as to be removable, and a so-called four face turntable wherein four carriages having an L letter cross-section are provided on a turntable in quadrilateral fashion and each group of four kinds of plate glass is put against each of the carriages so as to be removable.

However, the apparatus for supplying plate glass disclosed in JP-B-772021 has a disadvantage in that a need for provision of the rails on a ceiling or a wall in a building as in a typical floor traveling crane makes the apparatus quite larger.

In the case wherein a turntable is used, there is disadvantage in that if the diversification in the kinds of plate glass needs to make the turntable extremely larger depending on the diversification. In practice, the maximum size of the turntable is the four face turntable. In addition, since the position that the suction caps of the plate remover suck plate glass changes depending on the number of remaining plate glass on a carriage, the arm with the suction cups fixed thereto is required to project and withdraw with respect to a glass surface, which creates a problem in that the mechanism becomes complicated.

The present invention is attained in consideration of such circumstances. It is an object of the present invention to provide an apparatus for supplying plate-shaped materials capable of dealing with many kinds of plate glass for instance and making the space for installation of the apparatus smaller.

In order to attain the object, the present invention provides an apparatus for supplying plate-shaped materials, comprising a plurality of carriages, each of which carries at least one plate-shaped material thereon so as to put the plate-shaped material thereagainst; a carriage transporter for moving a desired carriage among the plural carriages to a certain unloading position; a plate remover including a device for removing a plate-shaped material from the desired carriage and for releasing the removed plate-shaped material; and a plate remover transporter which moves the plate remover to a removing position where the plate-shaped material is removed from the desired carriage moved to the unloading position, and which moves the plate remover to a releasing position where the removed plate-shaped material is released.

In accordance with the present invention, many kinds of plate-shaped materials are sorted into different kinds of groups, and the respective groups of plate-shaped materials are put against the respective different carriages. Since the carriages can be transported by the carriage transporter, the carriage against which a desired plate-shaped material is put can be moved to the unloading position. After the desired carriage is set to the unloading position, the plate remover is moved to the removing position by the plate remover transporter and the desired plate-shaped material is removed from the carriage set to the unloading position. The plate remover with the plate-shaped material held thereon is moved by the plate remover transporter to transfer the desired plate-shaped material to the releasing position. As a result, it is possible to deal with many kinds of plate-shaped materials and to save the space for installation of the apparatus.

In order to attain the object, the present invention also provides an apparatus for removing plate-shaped materials one by one and supplying the plate-shaped materials to a working table such as a cutter; comprising a plurality of carriages with wheels, each of which carries at least one plate-shaped material thereon so as to put the plate-shaped material thereagainst; carriage rails which are provided on a floor so as to movably carry the carriages thereon; a carriage transporter for moving a desired carriage among the plural carriages to a certain unloading position; a plate remover which includes an arm provided with a suction device for holding a plate-shaped material on the desired carriage by suction and an arm driving device for turning the arm, and which can be traveled by an electric motor for travel; plate remover rails which are provided on the floor so as to guide the plate remover to a removing position where the plate remover confronts the desired carriage on the unloading position and to direct the plate remover to a suction releasing position where the plate remover is withdrawn from the removing position; a conveyor having rollers for transferring the plate-shaped material to a working table by a transferring force of the rollers when the plate remover is withdrawn to the suction releasing position, the arm is turned to a substantially horizontal position and suction by the suction device is released; and a controller which controls the carriage transporter, the arm driving device and the electric motor for travel so that the plate remover is advanced to the removing position after the carriage transporter is controlled to locate the desired carriage among the plural carriages to the unloading position, the plate-shaped material on the desired carriage is sucked by the suction device of the arm after the desired carriage is moved to the removing position by the carriage transporter, the plate remover with the plate-shaped material held by suction is withdrawn to the suction releasing position, the arm is turned to the substantially horizontal position into the conveyor, and suction by the suction device is released to put the plate-shaped material on the rollers of the conveyor.

In accordance with the latter mode of the present invention, many kinds of plate-shaped materials are sorted into different kinds of groups, and the respective groups of plate-shaped materials are put against the respective different carriages. Since the carriages are slidably carried on the carriage rails, a desired carriage can be moved to the unloading position by the carriage transporter. After the desired carriage is set to the unloading position, the plate remover advances to the removing position by driving the electric motor for travel, the desired carriage is moved to the removing position by the carriage transporter and a plate-shaped material on the desired carriage is sucked and caught by the suction device of the arm. Then, the plate remover with the plate-shaped material held thereon by suction is retracted from the removing position along the plate remover rails by driving the electric motor for travel in the reverse direction. After the plate remover is set to the suction releasing position, the arm is turned to the substantially horizontal position into the conveyor, and the suction by the suction device is released to put the held plate-shaped material on the rollers of the conveyor. The plate-shaped material which is put on the rollers of the conveyor is transferred onto the working table such as a cutter by the transferring force of the rollers.

In this mode, the slidable carriages can be combined with the self-propelled plate remover to deal with many kinds of plate-shaped materials and to save the space for installation of the apparatus.

If the carriage rails comprise a pair of outer rails provided in parallel and at least one inner rail provided inside and in parallel with the outer rails, if each of the carriages is constituted by connecting a rectangular arched frame and a lower receiving member with coupling members, if the rectangular arched frame is provided with outer wheels engageable with the outer rails, if the lower receiving member is provided with inner wheels engageable with the inner rail, and if the lower receiving member has such a width that a carriage can be housed between inner ends of the rectangular arched frame of a preceding carriage, the following carriage can be have the lower receiving member put into the inner ends of the rectangular arched frame of the preceding carriage to effectively provide the plural carriages with narrow spacing, the space for installation of the apparatus can be further saved.

The self-propelled plate remover may be combined with a stationary conveyor which is independently provided from the plate remover. The plate remover and the conveyor may be integrally coupled so that the entire conveyor including the plate remover is provided so as to advance to and retract from the removing position.

In the drawings:
Figure 1 is a plan view showing the arrangement of a glass working system including a plate glass supply apparatus to which a apparatus for supplying plate-shaped materials according to the present invention is applied;
Figure 2 is a perspective view of the plate remover shown in Figure 2;
Figure 3 is a plan view of essential portions of the plate remover shown in Figure 1, some of the portions depicted in imaginary lines;
Figure 4 is an enlarged view of a coupling portion between a plate remover rail and a wheel;
Figure 5 is a plan view of the arrangement of rails which are provided on a floor in a building where the apparatus shown in Figure 1 is installed;
Figure 6 is a front view of a carriage shown in Figure 1;
Figure 7 is a right side view of the carriage shown in Figure 6;

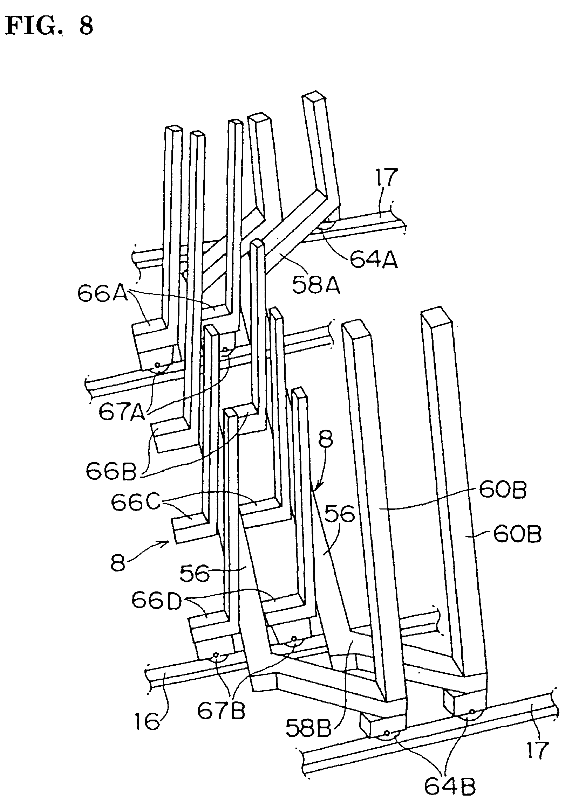

Figure 8 is a perspective view showing how a preceding carriage and the carriage just therebehind are nesting;
Figure 9 is a plan view of a traverser for sliding a carriage;
Figure 10 is a front view of the traverser shown in Figure 9;
Figure 11 is a plan view of a conveyor;
Figure 12 is a side view of the conveyor shown in Figure 11;
Figure 13 is a schematic plan view of the conveyor and the plate remover in a modified example;
Figure 14 is a detailed view of the detector shown in Figure 13;
Figure 15 is a side view showing the structure of a glass receiving cylinder shown in Figure 13;
Figure 16 is a side view of a plate glass storage section;
Figure 17 is a flowchart showing an automatic positioning control for a carriage in a first cycle operation;
Figure 18 is a flowchart showing an automatic positioning control for a carriage in a subsequent cycle operation wherein a designated carriage has a smaller carriage number than the carriage designated just before;
Figure 19 is a flowchart showing an automatic positioning control for a carriage in a subsequent cycle operation wherein a designated carriage has a larger carriage number than the carriage designated just before;
Figure 20 is a table explaining a specific example of the travel control for the traverser; and
Figure 21 is a flowchart showing a removing operation of the plate remover.

Now, preferred embodiments of the apparatus for supplying plate-shaped materials according to the present invention will be described in detail referring to the accompanying drawings.

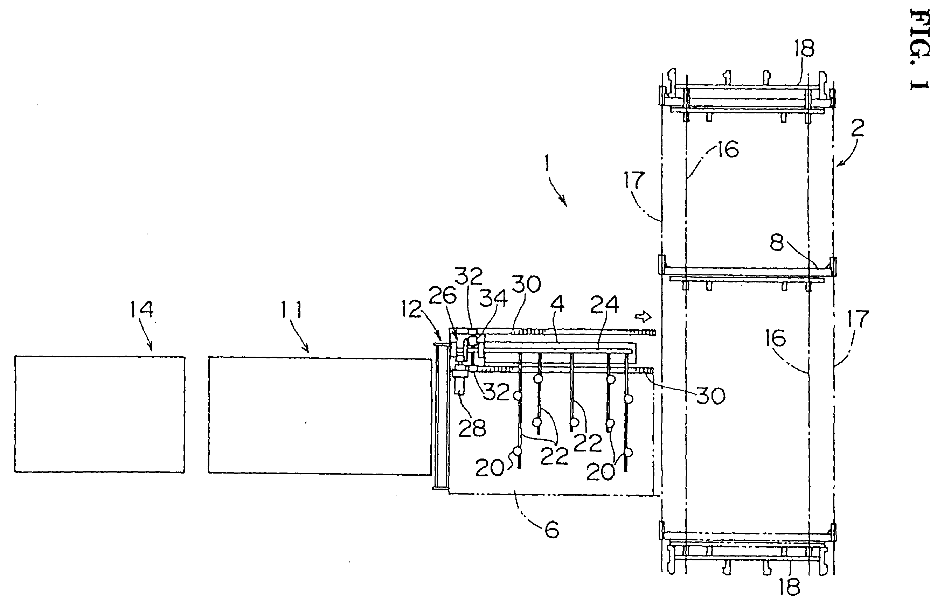

In Figure 1 is shown an example wherein the apparatus according to the present invention is applied to a plate glass supply apparatus. The plate glass supply apparatus 1 shown in Figure 1 is mainly constituted by a plate glass storage section 2, a self-propelled plate remover 4 and a conveyor 6. Each of sheets of plate glass (not shown in Figure 1) are put against carriages (carriages having an L letter cross-section) 8 in the plate glass storage section 2, the sheets of plate glass are removed by the plate remover 4 one by one, and the sheets of plate glass are transferred onto a cutter 11 through the conveyor 6. In Figure 1, reference numeral 12 designates a powder eliminating device, and reference numeral 14 designates a breaking table.

In the plate glass storage section 2, a plural number of the carriages 8 are provided so as to be slidable along carriage rails 16 and 17, and the sheets of plate glass (plate-shaped materials) are put against to the respective carriages 8. The number of the carriages 8 is theoretically 1 to infinity.

The carriages 8 are moved in upward and downward directions in the figure by a traverser 82 stated later so that a carriage 8 that carries a desired kind of plate glass to be supplied to the cutter 11 can be set to an unloading position. Carriages 18 which also work as stoppers are fixed at opposite ends of the carriage rails 16 and 17 so as to not only serve as transport limitations for the carriages 8 but also put plate glass thereagainst as well. The structure of the carriages 8 and the structure of the traverser 82 will be explained in detail.

The plate remover 4 includes arms 22 having suction cups 20, a shaft 24 carrying the arms 22 and a driving unit 26. The driving unit 26 houses an arm turning electric motor (arm driving device) 28 to rotate the shaft 24 so as to turn or swing the arms 22. The driving unit 26 also houses pinions 32 in engagement with racks 30 and an electric motor for travel 34. The pinions 32 can be rotated by a rotational force from the electric motor for travel 34 to move the plate remover 4 in right and left directions in this figure in combination of the racks 30 and the pinions 32. The arm turning electric motor 28 and the electric motor for travel 34 are controlled by a controller (control device) which is not shown.

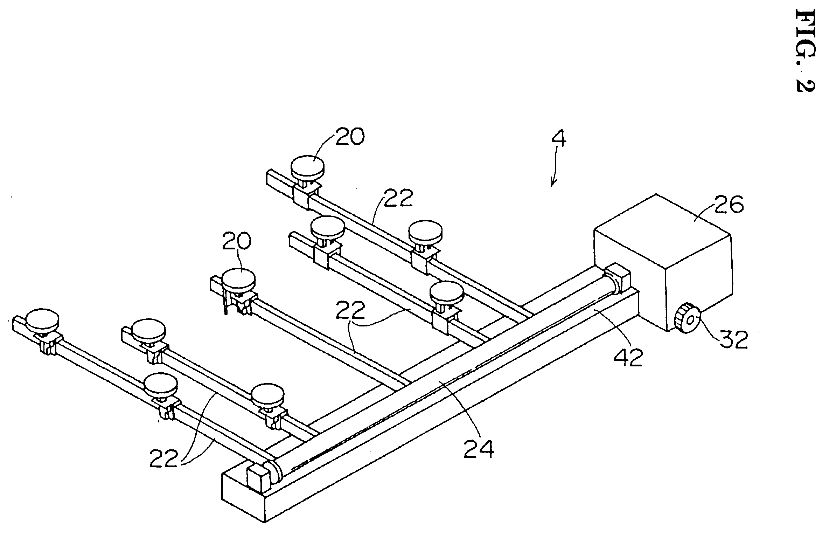

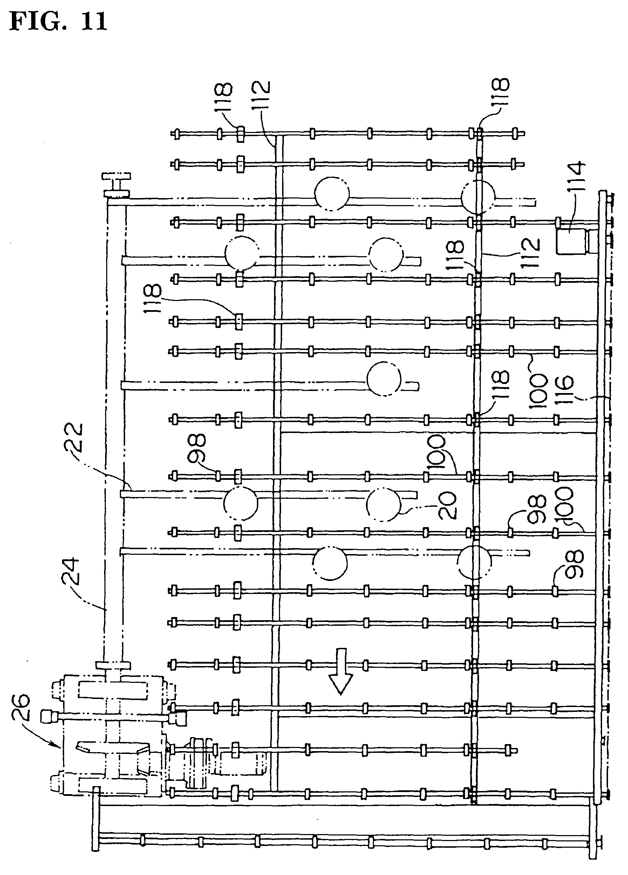

In Figure 2 is shown a perspective view of the plate remover 4. In the shown example, the arms 22 are provided at five locations with proper spacing, and each of arms 22 is formed with one or two suctions cups 20. The spacing between the respective arms 22 is determined so as to prevent the arms from interfering with rollers of the conveyor 6 so that the respective arms 22 are positioned in the spaces between the rollers of the conveyor 6 when the arms 22 are turned to a horizontal position into the conveyor 6 (see Figure 11).

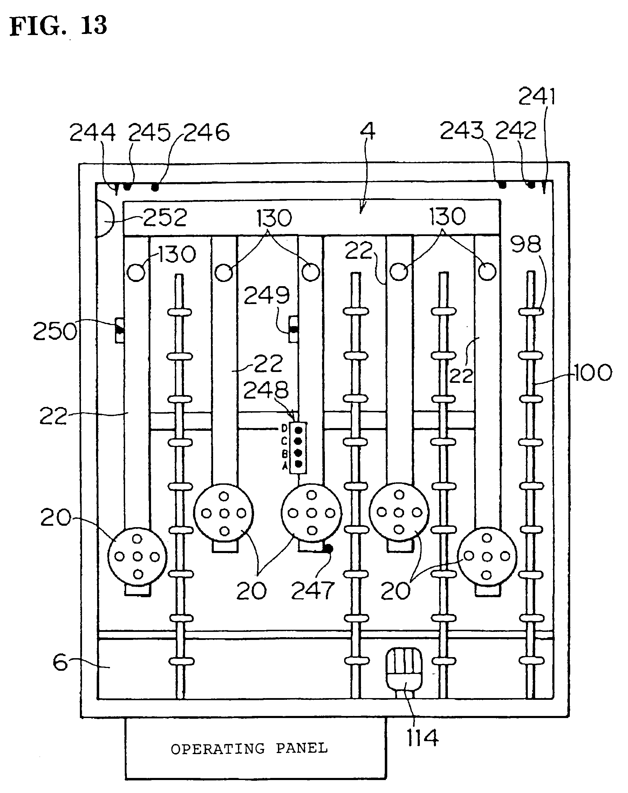

There are no limitations on the mounting position and the number of the suction cups 20. In order to deal with large and small sizes of plate glass, the three inner arms 22 among the five arms 22 have the suction cups 20 provided thereon at one or two locations near to the shaft 24 and the two outer arms 22 have the suction cups 20 provided at two locations farther from the shaft 24 than the suction cups on the three inner arms 22 in the example shown in Figure 2. Some of the suction cups 20 may be replaced by glass receiving cylinders (see Figure 13).

The respective suction cups 20 communicate with a pump through pipes not shown. When a vacuum is drawn in the suction cups 20, the plate glass can be held by suction. When compressed air is fed into the pipes as soon as drawing the vacuum is stopped, the suction ceases to release the plate glass.

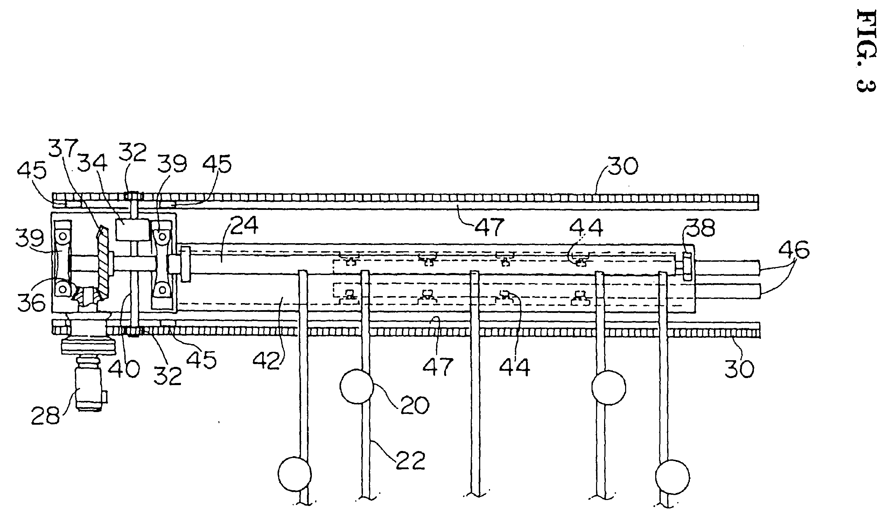

In Figure 3 is shown a plan view of essential portions of the plate remover 4. As shown in this figure, the arm turning electric motor 28 is arranged in a direction perpendicular to the shaft 24 with the arms 22 carried thereon. The rotational force of the arm turning electric motor 28 is transmitted to the shaft 24 through bevel gears 36 and 37. The shaft 24 is supported by bearings 38 and 39 and is rotated by the rotational driving force transmitted from the arm turning electric motor 28.

The electric motor for travel 34 is arranged in a direction perpendicular to a shaft 40 which couples the pinions 32. The rotational force of the electric motor for travel 34 is transmitted to the shaft 40 through a helical coupling not shown.

A truck 42 that is equipped with the shaft 24 carrying the arms 22 thereon has a bottom provided with wheels 44 at four locations in two rows (totally 8 locations) and wheels 45 at two locations into two rows (totally for four locations). The wheels 44 are engaged with auxiliary rails 46 for the plate remover and the wheels 45 are engaged with primary rails 47 for the plate remover.

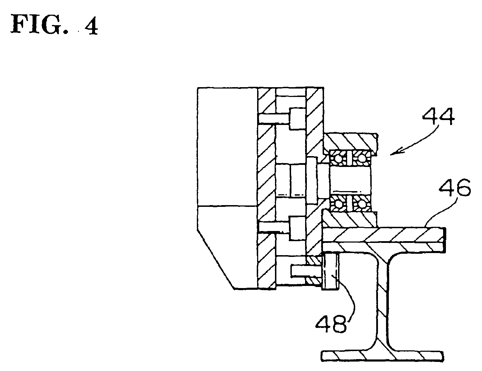

In Figure 4 is shown an enlarged view of a coupling portion between an auxiliary rail for the plate remover 46 and a wheel 44 of the truck. The respective wheels 44 are provided with cam followers 48. The auxiliary rails 46 for the plate remover are sandwiched between the wheels 44 rolling on upper surfaces of the auxiliary rails 46 and the cam followers 48 in engagement with lower surfaces of the auxiliary rails to prevent the plate remover 4 from overturning.

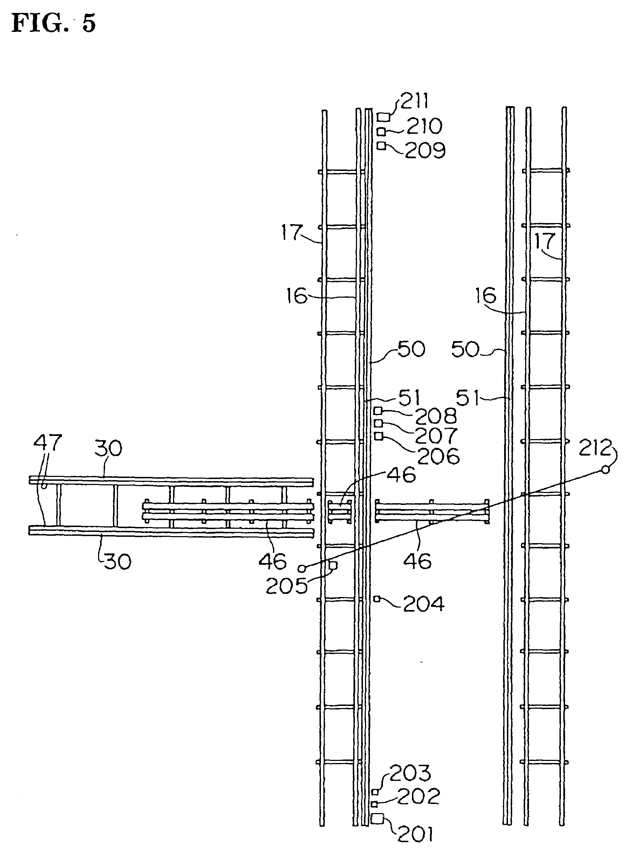

In Figure 5 is shown a plan view of the rail arrangement on a floor in a building where the plate glass supply apparatus 1 shown in Figure 1 is installed. Reference numerals 16 and 17 designate the carriage rails which are provided in a vertical direction in Figure 5. Traverser racks 50 with which pinions 92 of the traverser 82 stated later are engaged, and traverser rails 51 are provided inside the carriage rails 16.

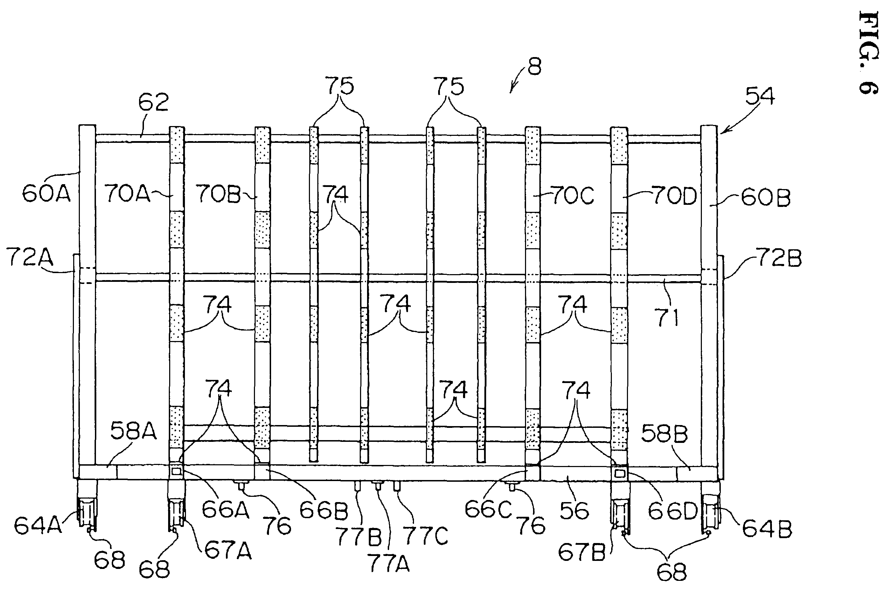

The carriage rails 16 and 17 are four rails which are constituted by two pairs of outer rail 17 and inner rail 16. The outer rails 17 are engaged with outer wheels 64A and 64B of the carriages 8, and the inner rails 16 are engaged with inner wheels 67A and 67B of the carriages 8 (see Figure 6).

The rails that are provided in a lateral direction in Figure 5 and are indicated by reference numeral 47 are the primary rails for the plate remover. The rails indicated by reference numeral 46 are the auxiliary rails for the plate remover. Reference numeral 30 designates the racks which are engaged with the pinions 32 in the driving unit 26 of the plate remover 4. As shown in this figure, the auxiliary rails 46 for the plate remover extend so as to be perpendicular to the carriage rails 16 and 17, the traverser rails 51 and the traverser racks 50. The auxiliary rails 46 for the plate remover are separated into three sections by provision of the intersections.

The spacing between the wheels 44 of the truck 42 of the plate remover 4 is determined so that the plate remover 4 can smoothly move even on such discontinuous rails. Even if one of the four wheels 44 in each of the two rows which are provided on the truck 42 in a longitudinal direction arrives at a discontinuous portion of the auxiliary rails 46 of the plate remover, the remaining three wheels 44 can keep the plate remover 4 at a horizontal position.

In the vicinity of the rails provided on the floor, various sensors indicated by reference numerals 201-212 are provided. Reference numerals 201 and 211 designate limit switches for detection of overrun of the traverser 82 which moves the carriages 8. The respective limit switches are provided in the vicinity of opposite ends of a traverser rail 51 or a traverser rack 50. Reference numeral 202 designates a proximity sensor which detects a lower end stopping position of the traverser 82 (corresponding to a left end stopping position stated later). Reference numeral 203 designates a proximity sensor which detects a deceleration starting position to stop the traverser 82 at the stopping position. A proximity sensor 210 which detects an upper end stopping position (corresponding to a right end stopping position stated later), and a proximity sensor 209 which detects a deceleration starting position are provided in the vicinity of the upper end as well.

Reference numeral 204 designates a proximity sensor (escaping position sensor) which detects whether a carriage 8 is located at a position apart from an access area of the plate remover 4. Reference numeral 205 designates a proximity sensor which detects whether a carriage 8 is located in a plate removing position where the plate remover 4 gets in and out. Reference numeral 207 designates a proximity sensor which detects a reference stopping position (called a reciprocating origin) for the traverser 82 at the time of removing a plate, and which also serves as a detector to detect an escaping position in an upper region above the plate removing position.

Reference numeral 206 designates a proximity sensor which detects a forward travel limiting position which is required when a desired carriage 8 is advanced from the reciprocating origin toward the plate remover 4 to suck a work (plate glass) in the plate removing operation.

Reference numeral 208 designates a proximity sensor which detects a stopping position (carrying-in position) where an empty carriage 8 is stopped to carry a work thereonto. Reference numeral 212 designates an area sensor which detects whether a carriage 8 is located in the plate removing position (plate removing area) where the plate remover 4 gets in and out.

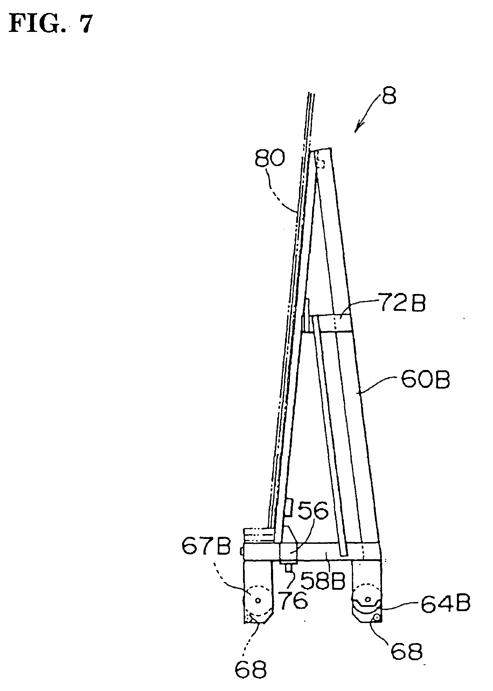

In Figure 6 is shown a front view of a carriage 8 shown in Figure 1. In Figure 7 is a side view of the carriage. The carriage 8 is constituted by a rectangular arched frame 54, a lower receiving member 56 and right and left coupling members 58A and 58B. The rectangular arched frame 54 includes right and left supporters 60A and 60B, and the left supporter 60A and the right supporter 60B in Figure 6 are provided in parallel with each other and are forwardly slanted (see Figure 7). The left supporter 60A and the right supporter 60B have upper ends connected by an upper beam member 62. The respective outer wheels 64A and 64B are provided on lower ends of the left supporter 60A and the right supporter 60B so as to be rotatable, and are movably carried on the outer rails 17 shown in Figure 5.

The lower receiving member 56 is provided in front of the rectangular arched frame 54 and in parallel with the upper beam member 62. The lower receiving member 56 has such a length that is shorter than the spacing between the right and left supporters 60A and 60B and longer than the spacing between the right and left inner rails 16. The lower receiving member 56 is formed with receivers 66A, 66B, 66C and 66D with certain intervals. The inner wheels 67A and 67B are rotatably provided on bottoms of the receivers 66A and 66D at the right and left ends of the lower receiving member. The inner wheels 67A and 67B are movably carried on the inner rails 16 shown in Figure 5. Each of the inner wheels 67A, 67B and the outer wheels 64A, 64B is provided with a cam follower 68 for preventing the carriage from overturning.

Referring to Figure 6, the left coupling member 58A has a front end fixed to the left end of the lower receiving member 56, and the left coupling member 58A has a rear end fixed to a lower end of the left supporter 60A. The right coupling member 58B has a front end fixed to the right end of the lower receiving member 56, and the right coupling member 58B has a rear end fixed to a lower end of the right supporter 60B. The right and left coupling members 58A and 58B project toward a forward direction thereof so as to be inwardly directed in taper fashion.

Backup members 70A, 70B, 70C and 70D have respective lower ends fixed to the respective receivers 66A, 66B, 66C and 66D fixed to the lower receiving member 56, and the respective backup members 70A, 70B, 70C and 70D have respective upper ends fixed to the upper beam member 62. The respective backup members 70A, 70B, 70C and 70D are fixed so as to be backwardly slanted. The backup member 70A, 70B, 70C and 70D have a reinforcing plate 71 fixed to substantially central portions thereof in parallel with the upper beam member 62 and the lower receiving member 56. The reinforcing plate 71 has right and left ends fixed to the right and left supporters 60A and 60B through coupling plates 72A and 72B.

Upper surfaces of the receivers 66A, 66B, 66C and 66D, and lower portions, central portions and upper portions of the backup members 70A, 70B, 70C and 70D are provided with cushioning rubber plates 74. In Figure 6, reference numeral 75 designates movable backup members. The lower receiving member 56 has a lower surface formed with pins 76, which can be clamped by holders 84 of the traverser 82 stated later.

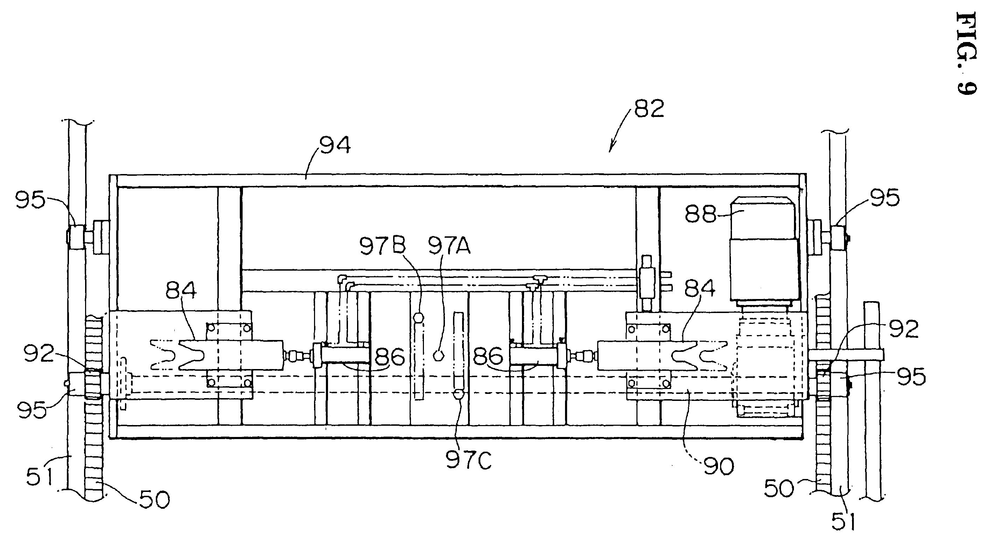

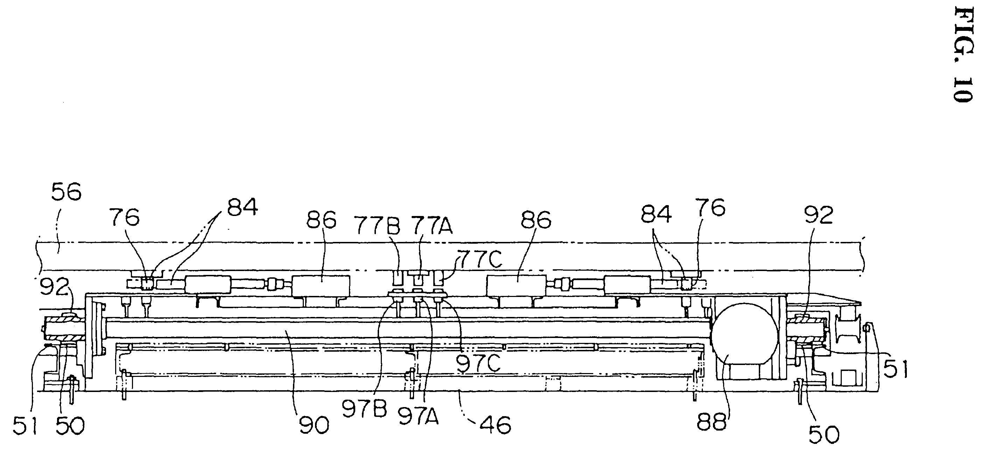

The lower receiving member 56 also has a central portion in the lower surface formed with dogs 77A, 77B and 77C for proximity sensors. The dogs 77A, 77B and 77C are detected by proximity sensor 97A, 97B and 97C provided on the traverser 82 though detailed explanation will be made later (see Figures 9 and 10).

When a plural number of sheets of plate glass 80 are stocked on a carriage 8, the sheets of plate glass 80 are put or leaned against the carriage so that the sheets of plate glass have lower ends put on the rubber plates 74 of the receivers 66A, 66B, 66C and 66D and rear sides contacted with the rubber plates 74 of the backup members 70A, 70B, 70C and 70D.

The plural carriages 8 are carried on the rails 16 and 17 shown in Figure 5. A carriage 8 can have the lower receiving member 56 and the right and left coupling members 58A and 58B put or housed between inner ends of the rectangular arched frame of the preceding carriage. When the subsequent carriage is partly housed in the preceding carriage, the receivers 66A, 66B, 66C and 66D of the subsequent carriage 8 have leading edge contacted with the lower receiving member 56 of the preceding carriage 8. Since a carriage 8 can be put in the preceding carriage 8, the plural carriages 8 can be effectively arranged with narrow spacing.

In Figure 9 is shown a plan view of the traverser 82 which slidably moves a carriage 8 in the plate glass storage section 2 shown in Figure 1. In Figure 10 is shown a front view of the traverser. The traverser 82 includes by the holders 84 for clamping the pins 76 of a carriage 8, pneumatic cylinders 86 for projecting and withdrawing the holders 84 in right and left directions in these figures, a traverser electric motor 88, a shaft 90 rotated by a rotational force of the traverser electric motor 88, and pinions 92 fixed to both ends of the shaft 90. Reference numeral 94 designates a frame.

The holders 84 are provided at right and left locations on an upper side of the traverser 82, and both holders can be driven in directions of coming near to and going away from each other by the pneumatic cylinders 86. The two holders 84 are located in positions nearer to a central portion than the pins 76 of a carriage 8. When the holders 84 are moved in the direction of going away from each other, the holders 84 clamp the pins 76. When the holders 84 are moved in the direction of coming near to each other, the holders 84 are withdrawn from the pins 76 to release clamping.

The traverser electric motor 88 is arranged in a direction perpendicular to the shaft 90, and the rotational force of the traverser electric motor 88 is transmitted to the shaft 90 through a helical coupling. The shaft 90 is rotatably supported by the frame 94, and the shaft 90 has both ends provided with the pinions 92. The right and left pinions 92 are engaged with the traverser racks 50. Using a combination of the pinions and the racks, the traverser 82 is traversed by a driving force from the traverser electric motor 88. The traverser 82 is connected to a controller (control device) not shown, and the movement of the traverser 82 is controlled by the controller.

In Figure 9, reference numeral 95 designates travelling wheels for the traverser 82, and the respective travelling wheels 95 roll on upper surfaces of the guide rails (the traverser rails) provided with the traverser racks 50 to direct traverser 82. The traverser 82 having such structure can catch a desired carriage 8 and move the desired carriage 8.

The traverser 82 has the central portion provided with the proximity sensors 97A, 97B and 97C for detecting the dogs 77A, 77B and 77C provided on the carriages 8. Reference numeral 97A is a proximity sensor which detects the stopping position of the traverser 82 and which also serves as a device to count the number of the carriage(s) 8 which the traverser has passed and reached. The proximity sensors indicated by reference numerals 97B and 97C are provided at a forward position and at a rear position around the proximity sensor 97A along the traveling direction of the traverser 82, and the proximity sensors 97B and 97C detect the deceleration starting positions of the traverser 82.

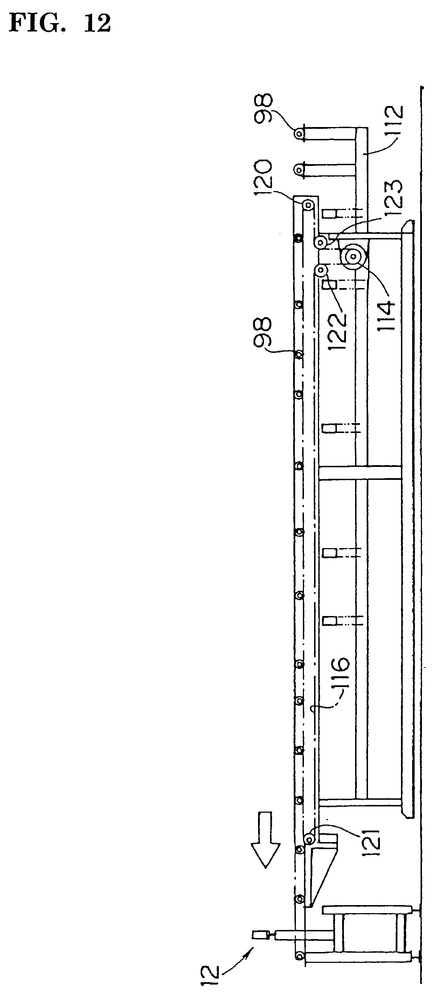

In Figure 11 is shown a plan view of the conveyor 6. In Figure 12 is shown a side view of the conveyor. The conveyor 6 is constituted by the roller shafts 100 having the plural rollers 98, a frame 112 supporting the roller shafts 100, a transferring electric motor 114, and a chain 116 for transmitting a driving force to the roller shafts 100 from the transferring electric motor 114.

In the shown example, each of the roller shafts 100 carries the rollers 98 at 8 or 9 locations thereon. The roller shafts 100 are provided with suitable spacing at many locations in a transferring direction (a direction indicated by an arrow in each of these figures). Each of the roller shafts 100 is rotatably supported by bearings 118 in the frame 112. Each of the roller shaft 100 has one end (a lower end in Figure 11) formed with a sprocket though not shown in detail. Each sprocket is engaged with an upper track of the chain 116 in an endless form, which extend around rollers 120, 121, 122 and 123 and a rotational shaft of the transferring electric motor 114.

When the transferring electric motor 114 is clockwise driven in Figure 12, the rotational force of the electric motor 114 is transmitted to each sprocket through the chain 116 to counterclockwise rotate the roller shaft 100, causing the rollers 98 to rotate along with the roller shaft 100. In this manner, a sheet of plate glass 80 on the rollers 98 is transferred toward the cutter 11 which is located on the left side of these figures.

In Figure 13 is shown a schematic plan view of the conveyor 6 and the plate remover 4. In this figure, a glass receiving cylinder 130 is shown to be carried on each of the arms 22 of the plate remover 4 as a modified example. The figure is shown in simplified and deformed fashion to primarily explain the arrangement of sensors on the conveyor and the plate remover.

Figure 13 is depicted in such a position that the plate glass storage section 2 (not shown in Figure 13) is located on the right side of the conveyor 6 and the cutter 11 (not shown in Figure 13) is located on the left side of the conveyor. A sheet of plate glass 80 (not show in Figure 13) which is put on the conveyor 6 is transferred in the left direction in Figure 13 by the rotational driving force of the rollers 98. On the other hand, the plate remover 4 moves (advances) in the right direction in Figure 13 to enter the removing area with the arms 22 vertically erected, and returns (withdraws) to the original position after having removed a sheet of plate glass 80 from a desired carriage 8.

In order to control the advancing and withdrawing movement of the plate remover 4, there are provided a limit switch 241 for detecting the overrunning of the plate remover 4 in the advancing movement, a proximity switch 242 for detecting the stopping position of the plate remover 4 in the advancing direction, a proximity switch 243 for detecting the deceleration starting position to stop the plate remover 4 at the stopping position, a limit switch 244 for detecting the overrunning of the plate remover 4 in the withdrawing movement, a proximity switch 245 for detecting the stopping position of the plate remover 4 in the withdrawing direction (corresponding to the suction releasing position), and a proximity switch 246 for detecting the deceleration starting position to stop the plate remover 4 at the withdrawal stopping position.

The arm 22 in a central portion of the plate remover 4 has a leading edge formed with a touch sensor 247 for detecting that the suction cup 20 contacts with a sheet of plate glass 80 on a desired carriage when removing the sheet of plate glass. The touch sensor 247 detects that the surface of a sheet of glass put against the desired carriage 8 contacts with the suction cups 20 of the plate remover 4 by advancing the traverser 82 with the desired carriage 8 clamped thereby from the reciprocating origin described with respect to Figure 5. The controller stops the advance of the traverser 82 based on detection from the touch sensor 247.

In Figure 13, reference numeral 248 designates a sensor which is called a double catch prevention sensor, which detects whether two sheets of plate glass or more have been caught at the plate removing step, and which is carried on the central arm 22 of the plate remover 4. The sensor 248 also serves as a detector for a last work in addition to detection of double catch. The double catch prevention sensor 248 may comprise a capacitance type sensor for instance, and may includes a plurality of sensors (A-D) to cope with a plural kinds of works (four kinds of works in the shown example). In the shown example, the sensor A is set to detect a sheet of glass having a thickness 3 mm, the sensor B is set to detect a sheet of glass having a thickness 4 mm (or 5 mm), the sensor c is set to detect a sheet of glass having a thickness 6 mm and the sensor D is set to detect a sheet of glass having a thickness 8 mm. Setting a thickness to be detected can be arbitrarily adjusted through an operating panel.

Reference numeral 249 designates a sensor which detects whether there is a work on the plate remover 4. Reference numeral 250 designates a sensor which detects whether a work (a sheet of plate glass) has been transferred onto the cutter by the conveyor 6 (a work has completely passed on the conveyor 6). The sensors 249 and 250 may use photoelectric tubes.

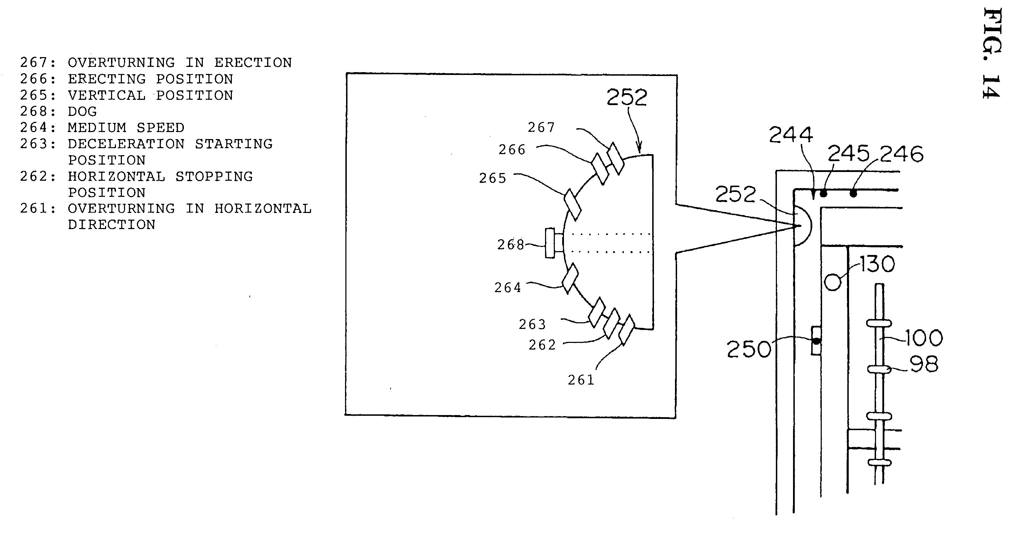

The shaft 24 which turns the arms 22 of the plate remover 4 has one end provided with a detector 252 to detect an erecting state and a horizontal state of the arms. In Figure 14 is shown an enlarged view of the detector 252. Proximity sensors indicated by reference numerals 261-267 are arranged around the shaft 24 of the plate remover 4, and a dog 268 is provided so as to be rotatable along with the shaft 24. The proximity sensors 261-267 can detect the approaching degree of the dog 268 to see rotational positions of the arms 22.

In Figure 14, there are provided the sensor 261 for detecting overturning in the horizontal direction, the sensor 262 for detecting the horizontal stopping position, the reference numeral 263 for detecting the deceleration starting position to stop the arms 22 at the horizontal stopping position, the sensor 264 for detecting a position where the rotational speed of the arms 22 is switched from a medium speed to a high speed, the sensor 265 for detecting the vertical position of the arms 22, the sensor 266 the erecting position (the removal erecting position) of the arms at the time of removing a sheet of plate glass 80 from a desired carriage 8, and the sensor 267 for detecting overturning in erection in that order from the lowest position.

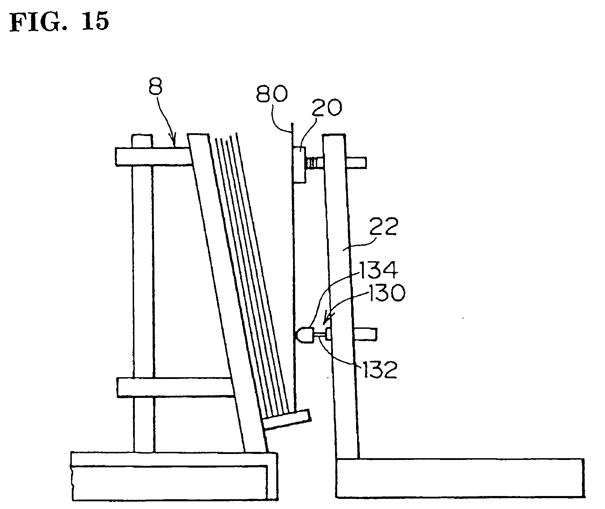

In Figure 15 is shown a side view explaining the structure of one of the glass receiving cylinders 130. As shown in this figure, each of the glass cylinders 130 comprises a projecting and withdrawing cylinder rod 132 and an elastic member (cushioning member) 134 such as a rubber member fixed to a leading edge of the cylinder rod. The projecting and withdrawing movement of the cylinder rods are controlled by the controller. The plate remover 4 catches a sheet of plate glass 80 by the suction cups 20 and the glass receiving cylinders 130 to remove the sheet of plate glass 80 from a desired carriage 8 and to put a sheet of plate glass 80 on a desired carriage 8.

Now, the operation of the plate glass supply apparatus thus constructed will be explained.

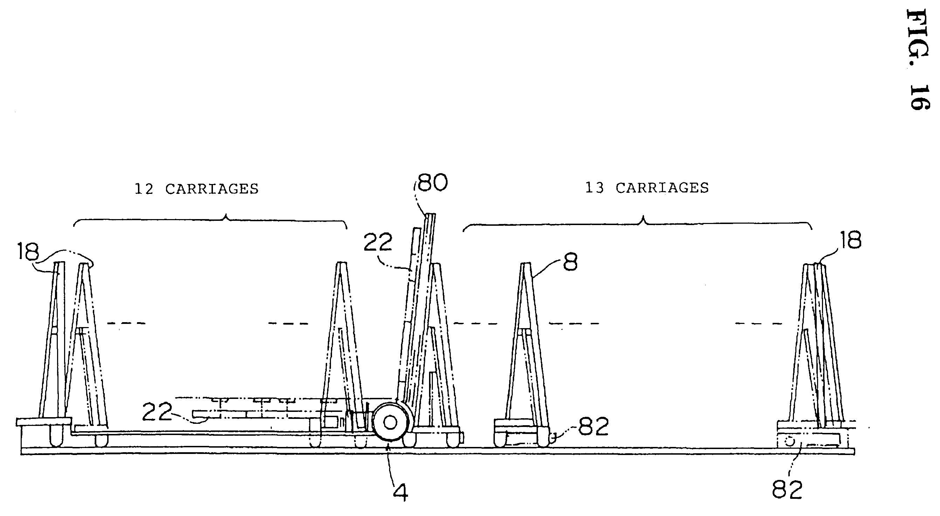

The plate glass supply apparatus in the example shown in Figure 1 can deal with 13 of the carriages 8. Specifically, the plate glass storage section 2 can house 13 of the carriages 8 in a right side storage area and has a space to house 12 of the carriages in a left side storage area as shown in Figure 16. The right side and left side storage areas are divided having an access point (the removal position) of the plate remover 4 as a boarder reference. Sequential numbers are allotted to all carriages 8 so that the respective carriages have specific numbers such as a No. 1 carriage, a No. 2 carriage ... a No. 13 carriage in the order from the carriage on the right end side in Figure 16.

When the specific number of desired carriage 8 to have a sheet of glass removed therefrom is inputted on a setting screen of a touch panel provided on the operating panel, and when an automatic operation starting bottom is depressed, the following automatic operation will start. In order to simplify explanation, it is assumed that all carriages 8 are located in the storage area on the right side of the removing position (the upper storage area in Figure 1) in the initial stage.

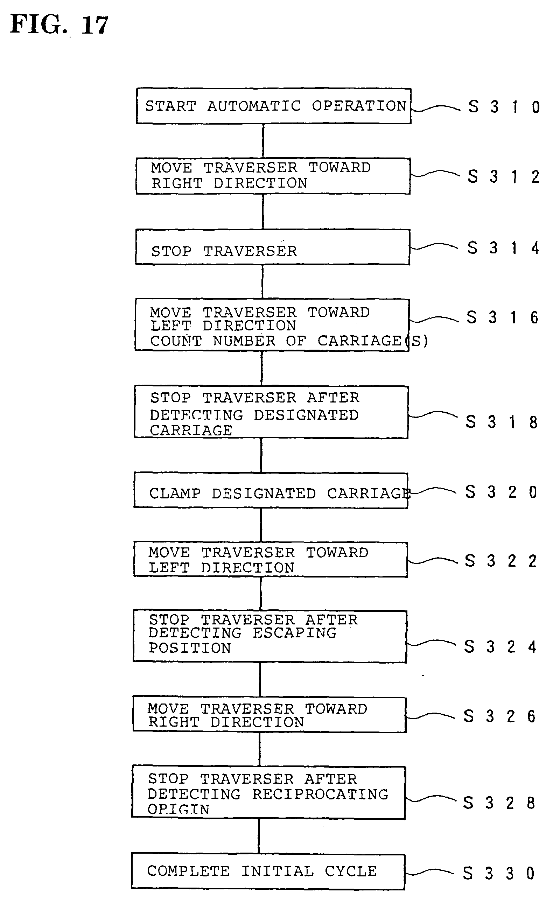

In Figure 17 is shown a flowchart of an automatic positioning control for the carriages. When the automatic operation starts with the initial stage (Step S310), the traverser 82 is first moved to the right direction in Figure 16 or the upper direction in Figure 1 (Step S312). When the proximity sensor 210 described with respect to Figure 5 detects that the traverser 82 has arrived at the right end stopping position, the traverser 82 is stopped (Step S314). Next, the traverser 82 is moved from the right end stopping position toward the left direction (Step S316). The proximity sensor 97A counts the number of carriage(s) 8 which the traverser has passed and reached during the movement toward the left direction. Since the counted number corresponds to the specific number of the carriages 8, the desired carriages 8 can be found based on detection by the proximity sensor 97A.

After the carriage 8 which corresponds to the specific number designated from the operating panel has been detected in that manner, the traverser 82 is stopped at the location of that carriage 8 (Step S318). Next, that carriage 8 is clamped (Step S320), and the traverser 82 is moved toward the left direction along with that carriage 8 (Step S322).

Then, the traverser 82 is stopped when the proximity sensor 204 detects that the traverser 82 has arrived at an escaping position (Step S324). When the designated carriage 8 has been slided to the escaping position in that manner, all carriages 8 which have a greater specific number than the designated carriage 8 have also been moved on the left side of the escaping position to establish a state wherein there is no obstacle to remove a sheet of glass by the plate remover 4.

After that, the traverser 82 is moved in the right direction (Step S326). After the proximity sensor 207 detects that the traverser 82 has reached the reciprocating origin, the traverser 82 is stopped (Step S328).

In this manner, only the designated carriage 8 is set at a position to be capable of removing a sheet of glass (corresponding to an unloading position). After that, the operation proceeds to a step for removal by the plate remover 4 to carry out the removal of a designated number of sheet(s) of the plate glass 80, completing the initial cycle (Step S330). The movement of the plate remover 4 and the control method for the movement in the plate removing step will be explained later.

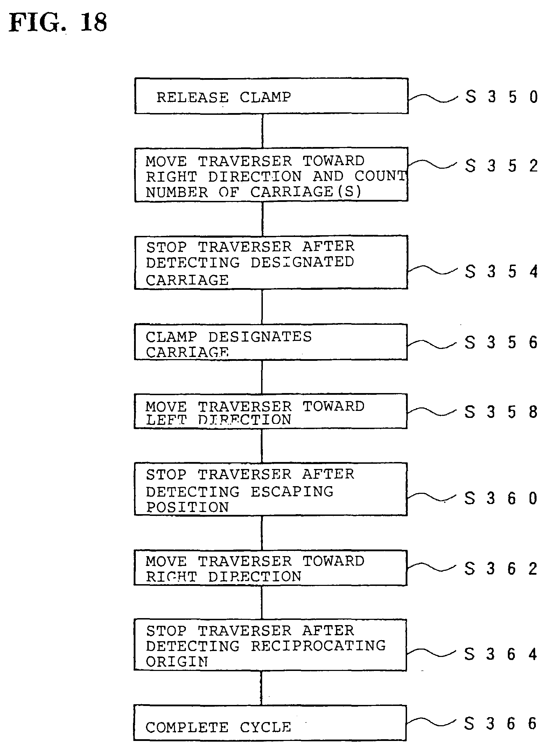

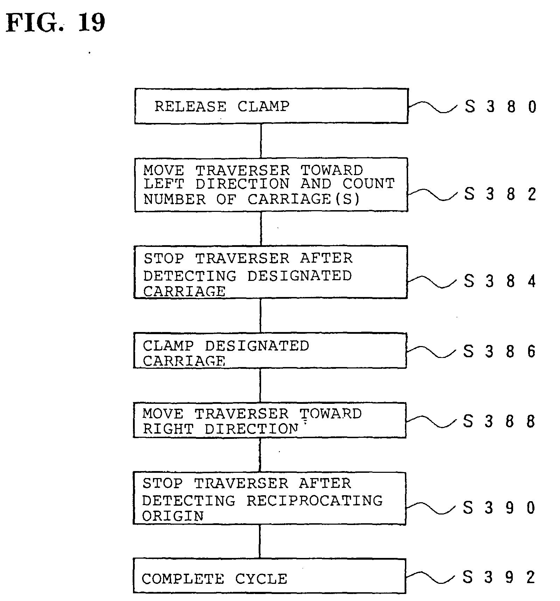

In Figures 18 and 19 are shown in flowcharts of an automatic control process in cycles subsequent to the first cycle. In Figure 18 is shown a flowchart in the case of designating a carriage 8 which has a smaller specific number than the carriage 8 designated in a previous cycle. In Figure 19 is shown a flowchart in the case of designating a carriage 8 which has a greater specific number than the carriage 8 specified in a previous cycle.

Referring to Figure 18, when a newly designated carriage 8 has a smaller specific number than the carriage 8 designated in the previous cycle, the previously designated carriage 8 which has been clamped is first released (Step S350). Next, the traverser 82 is moved toward the right direction, and the number of the carriage(s) 8 which the traverser has passed and reached is counted by the proximity sensor 97A (Step S352). When the carriage 8 which corresponds to the newly designated specific number is detected, the traverser 82 is stopped at the location of that carriage 8 (Step S354), and that carriage 8 is clamped (Step S356).

After that, the traverser 82 is moved in the left direction along with that carriage 8 (Step S358). When the proximity sensor 204 detects that the traverser 82 has arrived at the escaping position, the traverser 82 is stopped (Step S360). Next, the traverser 82 is moved to the right direction (Step S362). When the proximity sensor 207 detects that the traverser 82 has reached the reciprocating origin, the traverser 82 is stopped (Step S364).

In this manner, the previously designated carriage 8 is extruded toward the left direction with respect to the escaping position, and the newly designated carriage 8 is set to the reciprocating origin. After that, the operation proceeds to the plate removing step by the plate remover 4, and removing of a designated number of sheet(s) of plate glass is carried out, completing the present cycle (Step S366).

On the other hand, when a newly designates carriage 8 has a greater specific number than the previously designated carriage 8 in cycles subsequent to the first cycle, the following control is carried out since the newly designated carriage 8 is located in the left region with respect to the plate removing position. As shown in Figure 19, the previously designated carriage 8 which has been clamped is first released (Step S380). Next, the traverser 82 is moved toward the left direction, and the number of the carriage(s) 8 which the traverser has passed and reached is counted by the proximity sensor 97A (Step S382). When the carriage 8 which corresponds to the newly designated specific number is detected, the traverser 82 is stopped at the location of that carriage 8 (Step S384), and that carriage 8 is clamped (Step S386).

After that, the traverser 82 is moved toward the right direction along with that carriage 8 (Step S388). When the proximity sensor 207 detects that the traverser 82 has reached the reciprocating origin, the traverser 82 is stopped (Step S390).

In this manner, the newly designated carriage 8 is set to the reciprocating origin. After that, the operation proceeds to the plate removing step by the plate remover 4, and removing of a designated number of sheet(s) of plate glass is carried out, completing the present cycle (Step S392).

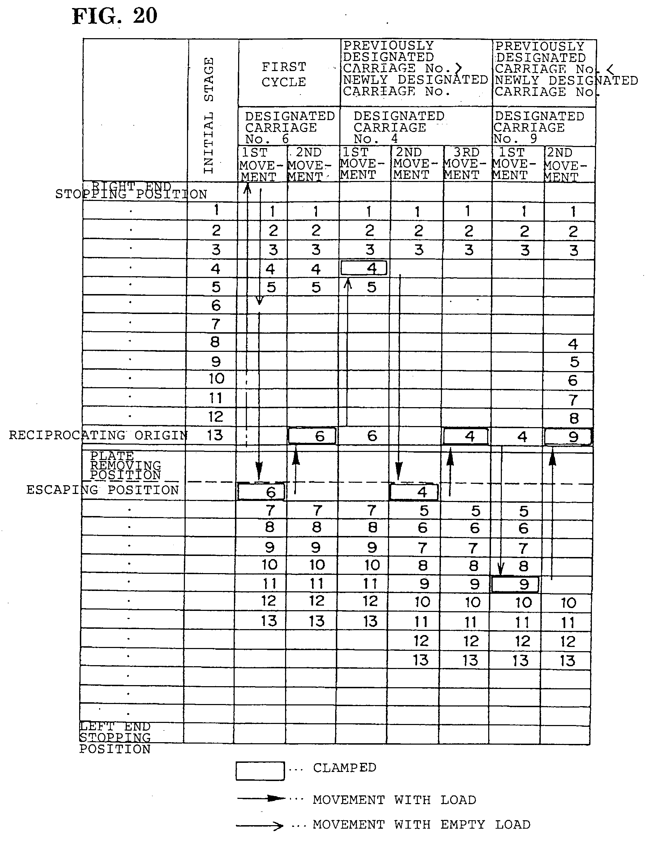

The automatic positioning control method for carriages which have been explained in reference to Figures 17-19 will be described referring to a specific examples shown in Figure 20.

The region which is occupied by the plate glass storage section 2 is indicated by a vertical column in the table shown in Figure 20. In this figure, numbers of 1-13 indicate the specific carriage number allotted to each of the carriages 8. For the sake of simplicity, it is assumed that in the initial stage all carriages 8 (No. 1 - No. 13) have been located an upper storage region (the right storage region in Figure 16) with respect to the plate removing position where the plate remover 4 gets in and out, which is shown in the table. At that time, the traverser 82 may take any position and may be located at position where the No. 13 carriage occupies for instance.

In order to remove a sheet of plate glass 80 from the No. 6 carriage in the first cycle (the No. 6 carriage is designated), the traverser 82 first moves toward the upper direction in Figure 20 without clamping any carriages 8 (movement with empty load), and the traverser stops at the right end stopping position based on detection from the proximity sensor 210. Then, the traverser moves toward the lower direction (the left direction in Figure 16), reversing the moving direction. The number of the carriage(s) 8 which the traverser has passed and reached is counted by the proximity sensor 97A during the movement of the traverser in the lower direction to detect the carriage having the designated specific number. When it is detected that the traverser 82 has reached the position of the No. 6 carriage, the traverser 82 stops and clamps the No. 6 carriage. The traverser moves to the escaping position with the No. 6 carriage clamped (movement with load). The movement of the traverser 82 with the No. 6 carriage clamped causes the No. 7 - No. 13 carriages to move in the left direction along with the No. 6 carriage.

When the traverser 82 with the No. 6 carriage clamped has reached the escaping position, the traverser 82 reverses the moving direction and moves the No. 6 carriage to the reciprocating origin. In this manner, the No. 6 carriage can be set to a position where a sheet of glass can be removed. When the area sensor 212 and the proximity sensor 205 find that there is no undesignated carriage in the plate removing area, the plate remover 4 advances to the plate removing position and removes a sheet of plate glass 80 from the No. 6 carriage.

When the No. 4 carriage which has a smaller specific number than the No. 6 carriage is designated in a subsequent cycle after completion of the first cycle where a sheet of plate glass 80 has been removed from the No. 6 carriage, the following operation will be carried out.

Since the controller has recognized that the traverser 82 has clamped the No. 6 carriage at the present stage, the controller can determine that the No. 4 carriage is located as the second carriage from the present position of the traverser 82 toward the right direction.

When the No. 4 carriage is designated, the traverser 82 releases the No. 6 carriage from clamping and moves with empty load toward the right direction. At that time, the number of the carriages 8 which the traverser has passed and reached is counted. When the second carriage 8, i.e. the No. 4 carriage is detected, the traverser 82 stops and clamps the No. 4 carriage. The traverser moves to the escaping position in the lower storage region, clamping the No. 4 carriage. The movement of the traverser 82 with the NO. 4 carriage clamped causes the No. 5 and No. 6 carriages to be carried into the left region with respect to the escaping position. At that time, the No. 7 - No. 13 carriages are carried toward the left direction as well.

When the traverser 82 with the No. 4 carriage clamped has reached the escaping position, the traverser 82 reverses the moving direction and move the No. 4 carriage to the reciprocating origin. In this manner, the No. 4 carriage can be set to a position where a sheet of plate glass can be removed. The plate remover 4 removes a sheet of plate glass 80 from the No. 4 carriage.

When the No. 9 carriage which has a greater specific number than the No. 4 carriage is designated in the subsequent cycle after completion of the plate removing cycle for the No. 4 carriage, the following operation will be carried out.

Since the No. 9 carriage is located as the fifth carriage from the present position of the traverser 82 toward the left direction, the controller controls the traverser 82 based on such determination. When the No. 9 carriage is designated, the traverser 82 releases the No. 4 carriage from clamping and moves with empty load toward the lower direction. At that time, the number of the carriages 8 which the traverser has passed and reached is counted. When the fifth carriage (the No. 9 carriage) is detected, the traverser 82 stops and clamps the No. 9 carriage. The traverser moves toward the upper direction, clamping the No. 9 carriage. When the traverser has reached the reciprocating origin, the traverser stops. In this manner, the No. 9 carriage is set to a position where a sheet of plate glass can be removed.

Although 13 of the carriages 8 are used in the shown example, an unlimited number of the carriages can be theoretically provided. If the number of the carriages alters from the shown example, a similar control method can be carried out.

Now, the operation of the plate remover 4 will be explained.

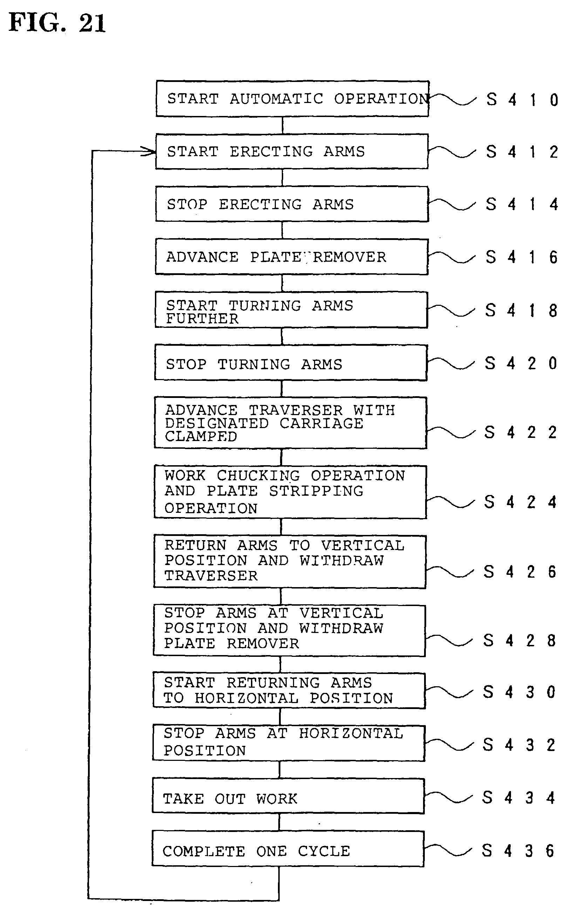

In Figure 21 is shown a flowchart of the plate removing operation of the plate remover 4. When an automatic operation starts (Step S410), the plate remover 4 starts erecting the arms 22 (Step S412). When the proximity sensor 265 for detecting the vertical position of the arms which has been explained with reference to Figure 14 detects that the arms 22 has erected at the vertical position (a position erected from the horizontal position at an angle of 90°), the plate remover stops turning the arms (Step S414).

When it is found that the carriage 8 having a designated specific number has been set to the reciprocating origin and that there is no obstacle in the plate removing area, the plate remover 4 moves (advances) to the removing position of the plate glass storage section 2, keeping the arms 22 erected at the vertical position (Step S416). Next, the arms 22 are further turned from the vertical position (Step S418), and the arms are stopped at a position oriented from the horizontal position at an angle of about 96° (Step S420). The plate remover sucks (chucks) a sheet of plate glass 80, slanting the arms at an angle of about 6° toward the designated carriage 8 from the vertical position (called the removal uprising position).

When the arms 22 are stopped at the removal uprising position, the traverser 82 which has stopped at the reciprocating origin moves (advances) toward the plate remover 4 (Step S422). As a result, the carriage 8 clamped by the traverser 82 moves toward the plate remover 4, and the suction cups 20 of the plate remover 4 contact with the sheet of plate glass 80 on the carriage 8. When the touch sensor 247 which is carried on the central arm 22 as stated with reference to Figure 13 detects that the suction cups 20 have contacted with the sheet of plate glass 80, the traverser 82 stops, and a work chucking operation and a plate stripping operation are carried out (Step S424).

With the sheet of plate glass 80 sucked and held by the suction cups 20, the plate remover returns the arms 22 to the vertical position, and simultaneously the carriage 8 withdraws to the reciprocating origin (Step S426). In this manner, only one sheet of plate glass 80 can be removed.

When it is found that the arms 22 are stopped at the vertical position, the plate remover 4 withdraws toward the conveyor 6 (Step S428). When it is detected that the plate remover 4 has returned to a certain withdrawal stopping position, the plate remover starts returning the arms 22 to the horizontal position (Step S430). When the proximity sensor 264 which has been explained with respect to Figure 14 detects that the arms 22 have returned to the horizontal position, the plate remover stops turning the arms 22 (Step S432).

The arms 22 with the sheet of plate glass 80 held by suction are turned toward the horizontal direction. When the sheet of plate glass 80 is put on the rollers 98 of the conveyor 6, suction by the suction cups 20 is released to transfer the sheet of plate glass 80 onto the rollers 98. The sheet of plate glass 80 on the rollers 98 of the conveyor 6 is transferred toward the cutter 11 by rotation of the rollers 98 (Step S434). At that time, the sheet of plate glass 80 is supplied onto a working table of the cutter 11 while the protective powder which has been deposited on the sheet of plate glass 80 is eliminated by a brush of the powder eliminating device 12.

In this manner, one cycle is completed (Step S436). When a plural number of sheets of plate glass 80 are successively removed, the process returns to Step S412 and the operation just above mentioned is repeated.

Although a sheet of plate glass 80 is removed from a carriage 8 in the example, a sheet of plate glass 80 may be brought onto a carriage 8 by a reverse procedure.

According to the plate glass supply apparatus in the example, the surface of a sheet of plate glass 80 which the suction cups 20 suck on contacts with the rollers 98 of the conveyor 6, and neither the suction cups 20 nor the rollers 98 of the conveyor 6 contact with an upper surface (a surface opposite to the sucked surface) of the sheet of plate glass 80. As a result, a coating film which is provided on one surface of a sheet of plate glass 80 can be protected. The apparatus in the example is appropriate to deal with a sheet of plate glass which has one surface provided with a metallic coating film.

Although the conveyor 6 is fixed in the example, the plate remover 4 and the conveyor 6 may be combined as a self-propelled unit so that the conveyor can advance into and withdraw from the plate glass storage section 2 along the rails.

In this case, the space for installation of the unit is greater than the fixed conveyor as in the example since it is necessary to ensure a region (a plate removing space) where the conveyor gets in and out of the plate glass storage section 2. However, since this arrangement can erect the arms 22 with the suction cups 20 during the slide movement of the plate remover 4, the arrangement can offer an advantage in that the cycle required for removing a sheet of plate glass can be shortened by simultaneously carrying out the slide movement of the plate remover and the erecting movement of the arms.

Although explanation of the example has been made with respect to the case wherein the present invention is applied to a plate glass supply apparatus, the present invention may be generally applied to an apparatus for supplying a plate-shaped material other than plate glass.

As explained, in accordance with the apparatus of the present invention, the carriage transporter which transports a desired carriage among the plural carriages to the certain unloading position, and the movable plate remover which can be moved to the plate removing position and the releasing position can be combined to not only deal with many kinds of plate-shaped materials, depending on the number of the carriages, but also save the space for installation of the apparatus.

In the second mode of the apparatus according to the present invention, the plural carriages are provided so as to be slidable on the carriage rails, the carriage transporter can move a desired carriage to the unloading position, and the plate remover with the suction device can be moved forwardly and backwardly along the plate remover rails by the driving force of the electric motor for travel. As a result, it is possible to not only deal with many kinds of plate-shaped materials but also save the space for installation of the apparatus.

In particular when the carriage rails comprise the paired outer rails provided in parallel and at least one inner rail provided inside and in parallel with the outer rails, when each of the carriages is constituted by connecting the rectangular arched frame and the lower receiving member with the coupling members, when the rectangular arched frame is provided with the outer wheels engageable with the outer rails, when the lower receiving member is provided with the inner wheels engageable with the inner rail, and when the lower receiving member has such a width that a carriage can be housed between the inner ends of the rectangular arched frame of the preceding carriage, the preceding carriage can accept the lower receiving member of the subsequent carriage in the inner ends of the rectangular arched frame thereof to effectively arrange the plural carriages with narrow spacing, further saving the space for installation.

## Claims

1. An apparatus for supplying plate-shaped materials (80), comprising:
a plurality of carriages (8, 18) , each of which carries at least one plate-shaped material (80) thereon so as to put the plate-shaped material (80) thereagainst;
a carriage transporter (82) for moving a desired carriage (8, 18) among the plural carriages (8, 18) to a certain unloading position;
a plate remover including (4) a device for removing a plate-shaped material (80) from the desired carriage (8, 18) and for releasing the removed plate-shaped material (80); and
a plate remover transporter (26) which moves the plate remover (4) to a removing position where the plate-shaped material (80) is removed from the desired carriage (8, 18) moved to the unloading position, and which moves the plate remover (4) to a releasing position where the removed plate-shaped material (80) is released.

2. An apparatus for removing plate-shaped materials (80) one by one and supplying the plate-shaped materials (80) to a working table; comprising:
a plurality of carriages (8, 18) with wheels (64A, 64B, 67A, 67B), each of which carries at least one plate-shaped material (80) athereon so as to put the plate-shaped material (80) thereagainst;
carriage rails (16, 17) which are provided on a floor so as to movably carry the carriages (8, 18) thereon;
a carriage transporter (82) for moving a desired carriage (8, 18) among the plural carriages (8, 18) to a certain unloading position;
a plate remover (4) which includes an arm (22) provided with a suction device (20) for holding a plate-shaped material (80) on the desired carriage by suction and an arm driving device (28) for turning the arm (22), and which can be traveled by an electric motor (34) for travel;
plate remover rails (46, 47) which are provided on the floor so as to guide the plate remover (4) to a removing position where the plate remover (4) confronts the desired carriage (8, 18) on the unloading position and to direct the plate remover (4) to a suction releasing position where the plate remover (4) is withdrawn from the removing position;
a conveyor (6) having rollers (98) for transferring the plate-shaped material (80) to a working table by a transferring force of the rollers (98) when the plate remover (4) is withdrawn to the suction releasing position, the arm is turned to a substantially horizontal position and suction by the suction device (20) is released; and
a controller which controls the carriage transporter (82), the arm driving device (28) and the electric motor (34) for travel so that the plate remover (4) is advanced to the removing position after the carriage transporter (82) is controlled to locate the desired carriage (8, 18) among the plural carriages (8, 18) to the unloading position, the plate-shaped material (80) on the desired carriage (8, 18) is sucked by the suction device (20) of the arm (22) after the desired carriage (8, 18) is moved to the removing position by the carriage transporter (82), the plate remover (4) with the plate-shaped material (80) held by suction is withdrawn to the suction releasing position, the arm (22) is turned to the substantially horizontal position into the conveyor (6), and suction by the suction device (20) is released to put the plate-shaped material (80) on the rollers (98) of the conveyor (6).

3. An apparatus for supplying plate-shaped materials (80) according to Claim 2, wherein the carriage rails (16, 17) comprise a pair of outer rails (17) provided in parallel with certain spacing and at least one inner rail (16) provided inside and in parallel with the outer rails (17); and wherein each of the carriages (8, 18) is constituted by connecting a rectangular arched frame (54) and a lower receiving member (56) with coupling members (58A, 58B), the rectangular arched frame (54) is provided with outer wheels (64A, 64B) engageable with the outer rails (17), the lower receiving member (56) is provided with inner wheels (67A, 67B) engageable with the inner rail (16), and the lower receiving member (56) has such a width that a carriage (8, 18) can be housed between inner ends of the rectangular arched frame of a preceding carriage (8, 18).

4. An apparatus according to Claims 2 or 3, wherein the conveyor (6) is fixed to a certain position outside the carriage rails (16, 17).

5. An apparatus according to Claims 2-4, wherein the conveyor (6) is integrally coupled with the plate remover (4), and the conveyor (6) and the plate remover (4) are provided so as to be slidable.
